# EUROPEAN PATENT APPLICATION

(11) **EP 4 778 846 A1**
(43) Date of publication of application: **22.07.2026**
(21) Application number: 25186452.6
(22) Date of filing: 30.06.2025
(51) Int. Cl.: B65D 19/28, B65D 19/38, B65D 19/42, B65D 85/68, F16F 15/00, G10K 11/00, H01F 27/06, H01F 27/33

(54) **TRANSFORMER TRANSPORT PLATE AND TRANSFORMER TRANSPORT DEVICE INCLUDING SAME**

(30) Priority: 20.01.2025 KR 20250008365
(71) Applicant: HD Hyundai Electric Co., Ltd., Seongnam-si, Gyeonggi-do 13553 (KR)
(72) Inventor: KANG, Jee Hwoon, 03058 Seoul (KR); SONG, Jae Hyun, 03058 Seoul (KR); LEE, Jin Woo, 03058 Seoul (KR); YUN, Min Ok, 03058 Seoul (KR)
(74) Representative: De Vries & Metman

(57) **Abstract**

Proposed is a transformer transport plate (100) including a base (110) configured to support a transformer (10) during transportation and to have a predetermined thickness, a downward extension part (120) configured to extend downward from a lower end of each side of the base by a predetermined length, and a first sound-absorbing material (130) attached to at least a portion of each side of the base, and configured to absorb noise.

## Description

### CROSS REFERENCE TO RELATED APPLICATION

The present application claims priority to Korean Patent Application No. 10-2025-0008365, filed January 20, 2025, the entire contents of which is incorporated herein for all purposes by this reference.

### BACKGROUND

### Technical Field

The present disclosure relates to a transformer transport plate and a transformer transport device including the same and, more particularly, to a transformer transport plate and a transformer transport device including the same, which can minimize errors in measuring transformer noise and vibration by suppressing noise and vibration of a plate transporting a transformer and reduce noise pollution in the workspace, thereby contributing to creating a pleasant work environment.

### Description of the Related Art

Transformers are key devices in power systems, playing a crucial role in converting voltage levels, and are widely used in power transmission and distribution as well as industrial sites and power generation facilities. The main components of a transformer are the core, windings, insulating oil, and tank. Transformers come in a wide array of sizes and shapes depending on the purpose and design. In particular, large transformers have a weight ranging from several tons to tens of tons and a large volume, and due to these characteristics, special technical considerations are required during transportation and installation.

There is a high risk of vibration and shock during the process of transporting a transformer or moving a transformer to the experimental environment. Vibration and shock during transport can damage the internal components of a transformer, which will negatively affect the performance and life of the transformer. Moreover, the noise generated when moving a transformer to the work area or placing a transformer in the experimental environment for noise measurement not only deteriorates the quality of the work environment, but also has a significant impact on the measurement accuracy. These problems require a technical alternative, that is, a more precise and reliable solution for transporting a transformer.

Transformers undergo a noise measurement process as part of the pre-shipment test, and problems also arise during this process. Transformer transport plates used with existing bogies or air pallets are designed as steel structures simply to support or move a transformer, and do not have vibration isolation or noise reduction functions. These transport plates transmit the vibration of a transformer as it is to the surrounding environment. As a result, not only the noise generated by the transformer but also the noise excited by the plate is included in the measured noise value, which makes accurate noise measurement difficult and reduces the reliability of the experimental results.

The bogies used as conventional transport devices are typically made of steel structures, which provide convenience of movement, but vibration insulation and noise reduction are not taken into account at all in the design. As a result, during the transport process, the vibration of a transformer is transmitted to the workspace and noise is radiated, causing noise pollution in the work environment or hindering the accuracy of noise measurement. In the case of air pallets, air levitation technology is used to smoothly move heavy transformers, but when used with a transport plate made of steel, the vibration isolation effect is limited and there are limits to blocking noise.

To solve the above problems, the present disclosure provides a technology that can effectively reduce vibration and noise by improving the structure of a transformer transport device. By adopting a design focused on minimizing noise radiation and vibration transmission by incorporating sound-absorbing materials and vibration-insulating materials, noise in the working environment is reduced and the precision of noise measurement in the experimental environment is improved. In addition, the transformer transport device is designed to be suitable for large transformers, enabling stable and efficient transport. The present disclosure proposes a technical alternative that can fundamentally solve problems occurring during the transport, installation, and testing of transformers while overcoming the limitations of existing transport devices.

### SUMMARY

Embodiments of the present disclosure aim to solve vibration and noise problems that occur during transportation of large electrical devices such as transformers or during noise measurement in a laboratory environment.

In addition, the embodiments aim to introduce a structural design capable of simultaneously achieving vibration insulation and noise reduction into a transport device, and to provide a technology that supports stable and efficient transport and testing of large transformers.

In addition, the embodiments aim to block vibrations generated in a transformer from being transmitted to the surroundings via a bogie or an air pallet, and reduce noise radiated into the workspace by applying sound-absorbing materials and vibration-insulating materials (NBR, Cork, a cork-rubber composite, etc.).

In addition, the embodiments aim to improve the accuracy of noise measurement in a pre-shipment test environment by preventing noise generated from a transport plate from being included in the measured noise value.

In addition, the embodiments aim to maintain the stability of equipment during the transportation and installation process of large transformers and to improve efficiency by overcoming the limitations of existing transportation devices.

In addition, the embodiments aim to improve the work environment by reducing noise pollution in the workspace and to ensure measurement quality in an experimental environment requiring precision.

In order to achieve the above objective, according to an aspect of the present disclosure, there is provided a transformer transport plate including: a base configured to support a transformer during transportation and to have a predetermined thickness; a downward extension part configured to extend downward from a lower end of each side of the base by a predetermined length; and a first sound-absorbing material attached to at least a portion of the each side of the base, and configured to absorb noise.

The transformer transport plate according to the present disclosure may further include a second sound-absorbing material provided to surround sides of the base and the downward extension part, and configured to absorb radiated noise.

The second sound-absorbing material may be made of an acoustic blanket or an acoustic sheet.

The transformer transport plate according to the present disclosure may further include a reinforcement part that has a predetermined shape and is continuously formed along a length direction of the downward extension part.

The reinforcement part may have a triangular shape and may be formed continuously.

The reinforcement part may have a square shape and may be formed at a regular interval.

The reinforcement part may have a semicircular shape and may be formed continuously.

The base may include a damping panel made of nitrile butadiene rubber (NBR), cork, or a cork-rubber composite for vibration insulation.

According to another aspect of the present disclosure, there is provided a transformer transport device including: a transformer transport plate on which a transformer is mounted and supported; and a moving part configured to move the transformer transport plate, wherein the transformer transport plate may include: a base configured to support the transformer during transportation and to have a predetermined thickness; a downward extension part configured to extend downward from a lower end of each side of the base by a predetermined length; and an acoustic blanket or an acoustic sheet provided to surround sides of the base and the downward extension part, and configured to absorb radiated noise.

The moving part may be an air pallet.

The moving part may be a bogie having a plurality of wheels and a driving part that drives the wheels.

The transformer transport device according to the present disclosure may further include a first sound-absorbing material attached to at least a portion of the each side of the base, and configured to absorb noise.

The transformer transport device according to the present disclosure may further include a reinforcement part that has a predetermined shape and is continuously formed along a length direction of the downward extension part.

The base may include a damping panel made of nitrile butadiene rubber (NBR), cork, or a cork-rubber composite for vibration insulation.

According to the embodiments of the present disclosure, it is possible to solve vibration and noise problems that occur during transportation of large electrical devices such as transformers or during noise measurement in a laboratory environment.

In addition, it is possible to introduce a structural design capable of simultaneously achieving vibration insulation and noise reduction into a transport device, and to provide a technology that supports stable and efficient transport and testing of large transformers.

In addition, it is possible to block vibrations generated in a transformer from being transmitted to the surroundings via a bogie or an air pallet, and reduce noise radiated into the workspace by applying sound-absorbing materials and vibration-insulating materials (NBR, Cork, a cork-rubber composite, etc.).

In addition, it is possible to improve the accuracy of noise measurement in a pre-shipment test environment by preventing noise generated from a transport plate from being included in the measured noise value.

In addition, it is possible to maintain the stability of equipment during the transportation and installation process of large transformers and to improve efficiency by overcoming the limitations of existing transportation devices.

In addition, it is possible to improve the work environment by reducing noise pollution in the workspace and to ensure measurement quality in an experimental environment requiring precision.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a side view showing a case where an air pallet is applied as a transformer transport device according to an embodiment of the present disclosure;
FIG. 2 is a side view showing a case where a bogie is applied as a transformer transport device according to an embodiment of the present disclosure;
FIG. 3 is a perspective view showing an example in which a first sound-absorbing material is applied to a transformer transport plate according to an embodiment of the present disclosure;
FIG. 4 is a perspective view showing an example in which a second sound-absorbing material is applied to a transformer transport plate according to an embodiment of the present disclosure;
FIG. 5 is a perspective view showing an example in which a triangular-shaped reinforcement part is applied to a transformer transport plate according to an embodiment of the present disclosure;
FIG. 6 is a perspective view showing an example in which a square-shaped reinforcement part is applied to a transformer transport plate according to an embodiment of the present disclosure;
FIG. 7 is a perspective view showing an example in which a semicircular-shaped reinforcement part is applied to a transformer transport plate according to an embodiment of the present disclosure;
FIG. 8 is a perspective view showing an example in which a damping panel is applied to a transformer transport plate according to an embodiment of the present disclosure; and
FIG. 9 is a perspective view showing an example in which a damping panel having a sandwich structure is applied to a transformer transport plate according to an embodiment of the present disclosure.

### DETAILED DESCRIPTION

Hereinafter, preferred embodiments of the present disclosure will be described in detail with reference to the attached drawings. However, the present disclosure is not limited to the embodiments described herein and may be embodied in other forms. Rather, the embodiments introduced herein are provided so that the disclosed contents can be thorough and complete, and so that the spirit of the present disclosure can be sufficiently conveyed to those skilled in the art. Like reference numerals represent like elements throughout the specification.

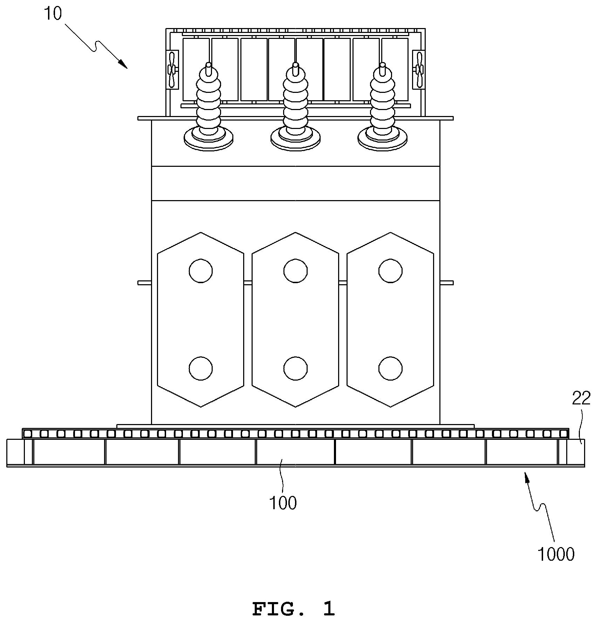

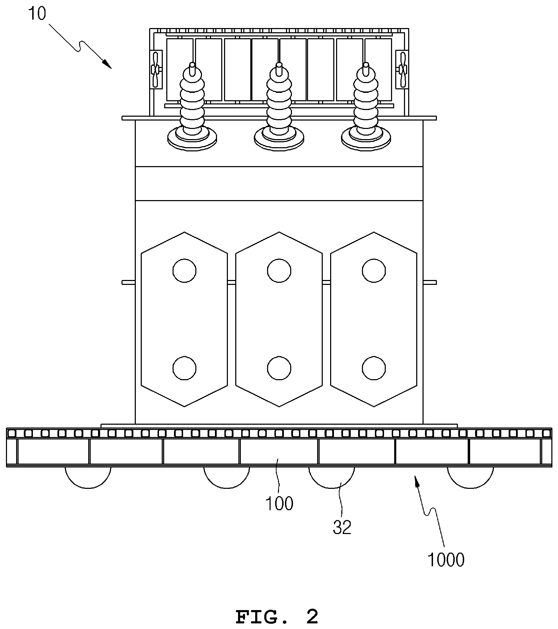

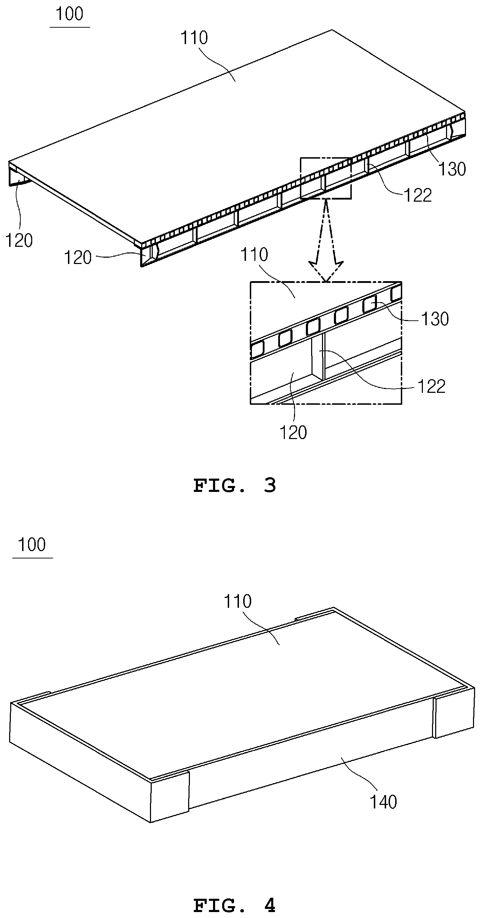

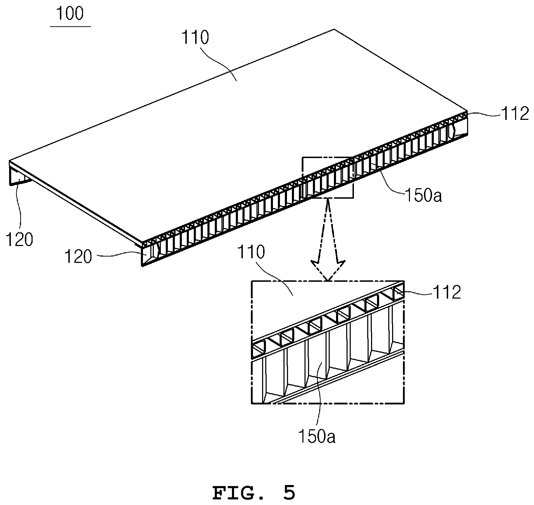

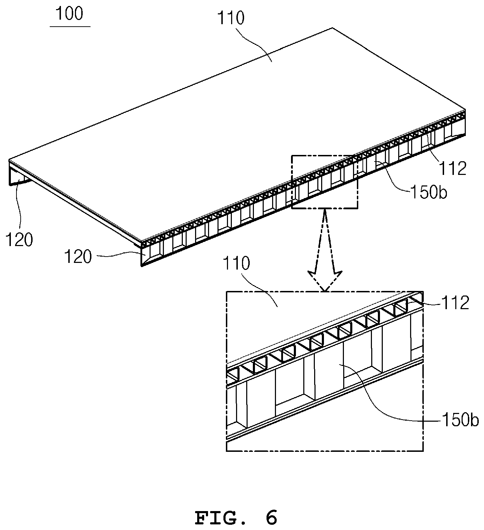

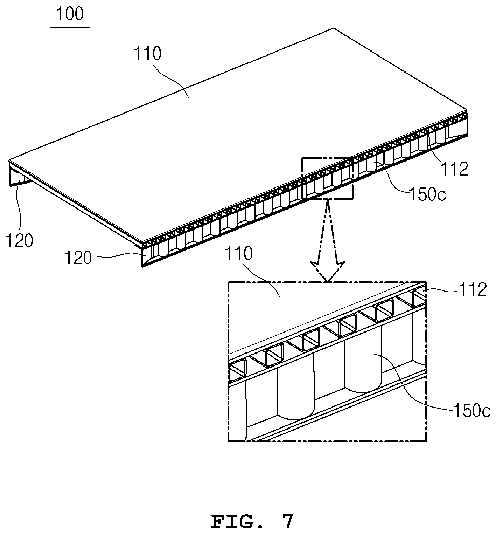

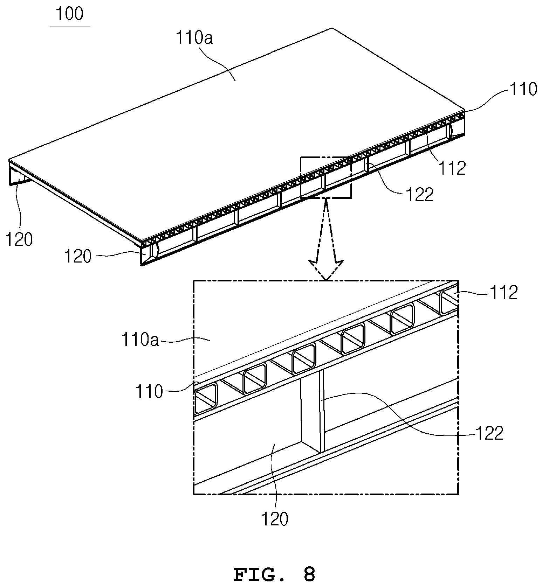

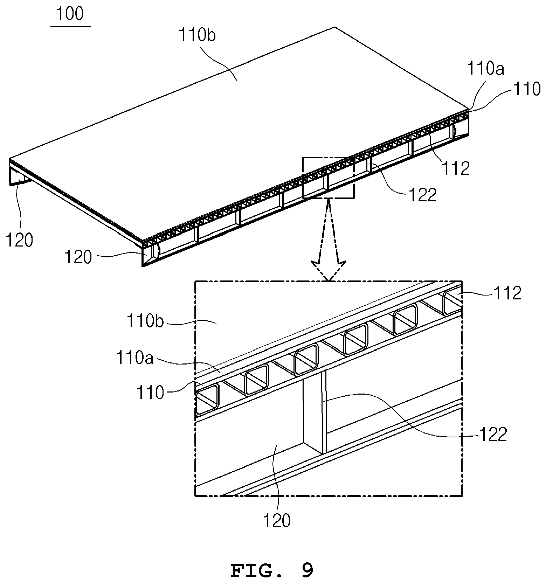

FIG. 1 is a side view showing a case where an air pallet is applied as a transformer transport device according to an embodiment of the present disclosure; FIG. 2 is a side view showing a case where a bogie is applied as a transformer transport device according to an embodiment of the present disclosure; FIG. 3 is a perspective view showing an example in which a first sound-absorbing material is applied to a transformer transport plate according to an embodiment of the present disclosure; FIG. 4 is a perspective view showing an example in which a second sound-absorbing material is applied to a transformer transport plate according to an embodiment of the present disclosure; FIG. 5 is a perspective view showing an example in which a triangular-shaped reinforcement part is applied to a transformer transport plate according to an embodiment of the present disclosure; FIG. 6 is a perspective view showing an example in which a square-shaped reinforcement part is applied to a transformer transport plate according to an embodiment of the present disclosure; FIG. 7 is a perspective view showing an example in which a semicircular-shaped reinforcement part is applied to a transformer transport plate according to an embodiment of the present disclosure; FIG. 8 is a perspective view showing an example in which a damping panel is applied to a transformer transport plate according to an embodiment of the present disclosure; and FIG. 9 is a perspective view showing an example in which a damping panel having a sandwich structure is applied to a transformer transport plate according to an embodiment of the present disclosure.

Referring to FIGS. 1 to 9, a transformer transport plate 100 according to an embodiment of the present disclosure may largely include: a base 110 having a predetermined thickness and supporting a transformer 10 during transportation; and a downward extension part 120 extending downward from the lower end of each side of the base 110 by a predetermined length.

First, FIGS. 1 and 2 are views showing a state in which the transformer 10 is mounted on a transformer transport device 1000. The transformer transport device 1000 includes the transformer transport plate 100 on which the transformer 10 is mounted and supported, and a moving part that moves the transformer transport plate 100.

In FIG. 1, an air pallet 22 is applied as the moving part. The air pallet 22 is a transport device used for moving heavy equipment such as a large transformer 10 by leveraging the principle of air levitation. The device is designed to minimize friction with the floor by injecting air beneath the pallet and to move heavy objects smoothly and stably.

The main function of the air pallet 22 is to significantly reduce the force required for movement by reducing contact with the floor. This allows even the transformer 10 weighing several tens of tons to be easily moved by one or two workers, and minimizes damage to the equipment or balance problems that may occur during movement.

In addition, the air pallet 22 is designed to be able to move in multiple directions so as to easily move forward, backward, left, and right, and even rotate. This allows efficient transport of large equipment even in narrow spaces or complex work environments.

The air pallet 22 functions best on a flat and smooth floor. Since the air pallet 22 utilizes the principle of air levitation, if the floor is not smooth or even, the air cushion may be damaged or the moving efficiency may be reduced. Thus, appropriate floor conditions need to be maintained in the working environment using the air pallet 22.

The air pallet 22 has the transformer transport plate 100 disposed thereon. In this embodiment, the transformer transport plate 100 is formed in a shape like " 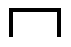 ", and the air pallet 22 may be placed in the lower space of the transformer transport plate 100. The transformer 10 may be placed on the transformer transport plate 100 and transported.

FIG. 2 shows a case where a bogie is applied as the moving part of the transformer transport device 1000 according to an embodiment of the present disclosure. The bogie performs the function of supporting and moving the transformer transport plate 100 on which the transformer 10 is placed, and is composed of a plurality of wheels 32 and a driving part that drives the wheels. A hydraulic motor (not shown) is applied as the driving part to drive the wheels 32 and move the transformer 10 smoothly and stably.

The bogie has a design optimized for easy and effortless movement of a transformer in the working environment. The wheel 32 is manufactured with a structure capable of withstanding high loads and minimizes friction to facilitate movement of the transformer. The hydraulic motor driving the wheels 32 provides precise speed control and high torque, which ensures stable movement of the large transformer 10. The bogie, like the air pallet 22, is located below the transformer transport plate 100 to transport the transformer 10.

Below, the transformer transport plate 100 constituting the transformer transport device 1000 is described in detail.

As shown in FIG. 3, the transformer transport plate 100 according to an embodiment of the present disclosure consists of the base 110 having a predetermined thickness and supporting the transformer 10 during transportation and the downward extension part 120 extending downward from the lower end of each side of the base 110 by a predetermined length. The transformer transport plate 100 may further include a first sound-absorbing material 130 attached to at least a portion of each side of the base 110 and absorbing noise.

The base 110 is formed in a roughly square panel shape, and due to this, may stably support the transformer 10. The upper surface of the base 110 is an area that contacts and supports the transformer and needs to have sufficient strength. To this end, as shown in FIG. 5, square pipes 112 may be installed at regular intervals under the base 110 to reinforce strength.

The square pipe 112 is made of a material having sufficient rigidity as a " 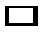 " shaped steel, and may be configured to have a length that is almost the same as the width of the base 110. In addition, the square pipes 112 may be arranged densely at regular intervals along the length direction of the base 110.

The downward extension part 120 is provided at the lower end of each side of the base 110. The downward extension part 120 provides structural stability to the transformer transport plate 100 by extending downward from the base 110 by a predetermined length.

The downward extension part 120 is provided with reinforcement ribs 122 at regular intervals in the longitudinal direction. The reinforcement ribs 122 increase the rigidity of not only the downward extension part 120 but also the entire structure of the transformer transport plate 100, thereby preventing the transformer transport plate 100 from being deformed or damaged.

As shown in FIG. 3, the first sound-absorbing material 130 is attached to the side of the base 110 of the transformer transport plate. The first sound-absorbing material 130 may be provided in the portion of the base 110 where the square pipe 112 is installed.

The first sound-absorbing material 130 may be applied to fill the inside of the square pipe 112 and the space between the square pipes 112. In this case, the first sound-absorbing material 130 has a function of absorbing noise and effectively reduces noise radiated to the sides of the transport plate 100. The first sound-absorbing material 130 is made of a material having excellent sound-absorbing properties, and in particular, may effectively suppress noise generated by vibration of the base 110 in contact with the transformer 10 during the transport process of the transformer 10 from being transmitted to the surrounding environment.

Meanwhile, as shown in FIG. 4, the transformer transport plate 100 according to an embodiment of the present disclosure may further include a second sound-absorbing material 140 that is provided to surround the sides of the base 110 and the downward extension parts 120, and that absorbs the radiated noise.

The second sound-absorbing material 140 may be applied in a form that completely surrounds the sides of the transformer transport plate 100 by being provided to cover the sides of the base 110, the downward extension parts 120, and the open part without the downward extension parts 120.

It is possible for one second sound-absorbing material 140 to cover the sides of the transformer transport plate 100, but it is also possible for several separate second sound-absorbing materials 140 to surround and cover the sides of the transformer transport plate 100 so as to overlap to some extent as shown in FIG 4.

In this case, the second sound-absorbing material 140 may be made of an acoustic blanket or an acoustic sheet.

The acoustic blanket is a flexible sound-absorbing material designed to effectively absorb and block noise. The acoustic blanket is made of thick fibrous materials or composite structures, and may include either porous sound-absorbing materials, wool-based materials such as mineral wool or glass wool, or both.

The exterior of the acoustic blanket is covered with durable vinyl or coated fabric to protect the blanket from environmental damage. When applied, the acoustic blanket absorbs noise generated from the transformer 10 and significantly reduces noise radiated to the outside, providing excellent attenuation effects, especially in specific frequency bands. In addition, the acoustic blanket is highly flexible and may be easily applied to various shapes or structures.

In the present disclosure, the acoustic blanket is used as the second sound-absorbing material 140 to wrap around the sides of the transport plate 100, thereby effectively blocking noise radiation into the workspace.

The acoustic sheet is a high-density soundproofing material that can simultaneously block noise and insulate vibrations. The acoustic sheet is made of a thin, strong material based on PVC, EPDM, or polymers, and is often composed of multilayer structures.

The acoustic sheet provides both soundproofing and vibration-blocking performance by including a viscoelastic layer that absorbs vibrations and a high-density layer that blocks noise therein. Despite its slight thickness, the acoustic sheet has high durability and chemical resistance, enabling the acoustic sheet to maintain performance even in a harsh and challenging environment presented by transformer transportation.

In the present disclosure, the acoustic sheet serves to block the transmission of noise and vibration by covering the sides of the transformer transport plate 100 as the second sound-absorbing material 140.

Furthermore, the acoustic blanket and the acoustic sheet may be applied together as needed. Both the acoustic blanket and the acoustic sheet may be applied as the second sound-absorbing material 140. For example, the acoustic blanket may be used to cover the entire side of the transport plate 100 to absorb noise generated from a large surface as a whole, and the acoustic sheet may be additionally applied to specific points such as the four corners to enhance noise and vibration blocking.

Such a combination maximizes the noise reduction effect, and the transformer transport plate 100 may greatly contribute to reducing noise pollution in the working environment and ensuring the accuracy of noise measurement.

Meanwhile, as shown in FIGS. 5 to 7, the transformer transport plate 100 according to the present disclosure may further include a reinforcement part 150a, 150b, or 150c that has a predetermined shape and is continuously formed along the length direction of the downward extension part 120.

The reinforcement part 150a, 150b, or 150c plays an important role in improving the structural strength of the transformer transport plate and effectively suppressing the transmission of vibration and noise. The interior of the reinforcement part 150a, 150b, or 150c may be additionally filled with sound-absorbing material to further enhance the noise reduction effect. When the reinforcement part 150a, 150b, or 150c is applied, the reinforcing rib 122 may be omitted.

The triangular-shaped reinforcement part 150a shown in FIG. 5 is formed continuously along the length direction of the downward extension part 120. The triangular-shaped reinforcement part 150a provides structurally high rigidity and effectively resists load or vibration applied from the outside. The interior of the triangular-shaped reinforcement part 150a may be filled with a sound-absorbing material, which absorbs resonance or vibration that may occur in the reinforcement part 150a itself, thereby minimizing noise radiation and vibration transmission. The triangular-shaped reinforcement part 150a may be arranged at a regular interval rather than in a continuous manner.

The square-shaped reinforcement part 150b shown in FIG. 6 may be arranged at a regular interval along the entire length of the downward extension part. The square-shaped reinforcement part 150b provides a wide internal space and may ensure structural strength and stability at the same time.

In addition, by filling the inside of the square-shaped reinforcement part 150b with sound-absorbing material, the sound energy generated inside the structure may be absorbed, thereby improving the noise-blocking performance. In particular, the square-shaped reinforcement part 150b effectively disperses vibrations generated over a wide area, thereby enhancing the overall stability of the transformer transport plate 100.

FIG. 7 shows an example in which the semicircular reinforcement part 150c is applied to a downward extension part 120. The semicircular reinforcement part 150c naturally alleviates the transmission of vibration due to the continuous curved structure thereof. This structure also has high resistance to external impact, greatly improving the durability of the transformer transport plate 100.

The inside of the semicircular reinforcement part 150c may also be filled with sound-absorbing material, which suppresses resonance that may occur due to the curved structure and effectively absorbs noise. The semicircular reinforcement part 150c may also be arranged at a regular interval rather than in a continuous manner.

As such, the triangular-shaped reinforcement part 150a, the square-shaped reinforcement part 150b, and the semicircular reinforcement part 150c provide unique strengths and noise reduction effects according to the respective shapes thereof. The configuration of filling the interiors of all the shaped reinforcement parts 150a, 150b, and 150c with sound-absorbing material offers more effective solution to noise radiation and vibration transmission problems. The transformer transport plate 100 of the present disclosure maximizes structural stability and vibration blocking performance through the various reinforcing members 150a, 150b, and 150c, and fundamentally resolves noise and vibration problems occurring during the transport of the transformer 10.

Meanwhile, FIG. 8 shows an embodiment in which the base 110 includes a damping panel 110a made of nitrile butadiene rubber (NBR), cork, or a cork-rubber composite for vibration insulation.

In addition, FIG. 9 shows a sandwich structure of the damping panel 110a and an additional panel 110b applied to the transformer transport plate 100 of the present disclosure. This structure is designed to absorb vibrations of the transformer 10 and block noise, and forms a multi-layer structure by placing the damping panel 110a between the base 110 which is a steel structure and the additional panel 110b.

The damping panel 110a is directly laid on or attached to the base 110 to absorb vibration energy generated from the transformer 10 and effectively block the vibration energy. The base 110 is a structure made of steel, stably supports the load of the transformer, and provides basic strength to the plate. The additional panel 110b is also a structure made of steel, and serves to cover the damping panel 110a from above, further increasing structural rigidity.

The multi-layer structure is designed so that the base 110 and the additional panel 110b distribute the load of the transformer 10 while the damping panel 110a absorbs vibrations.

In this case, the damping panel 110a may be made of nitrile butadiene rubber (NBR), cork, or a cork-rubber composite. NBR is a synthetic rubber with excellent vibration absorption performance and oil resistance, and converts vibrations generated during the transport of the transformer 10 into heat energy and blocks the heat energy.

NBR has high strength and high elasticity, making it durable even under repeated vibrations, and provides stable performance even in various temperature environments. When used as the damping panel 110a, NBR effectively absorbs vibrations across a range from micro to large oscillations generated during the transport of the transformer 10, thereby minimizing vibration transmission.

Cork is a porous material that comes from a natural material, and has excellent performance in absorbing sound energy and damping vibrations through the internal air layer thereof. Cork is light and flexible, and can withstand repeated compression with little deformation, which contributes to its ability to maintain stable performance even when used for a long period of time.

Cork also has advantages in terms of sustainability by being environmentally friendly and recyclable. When cork is applied as the damping panel 110a, noise and vibration absorption performance may be maximized.

A cork-rubber composite is a material in which cork particles are combined with synthetic rubber to form a flexible and durable structure. This composite retains the lightweight and vibration-damping characteristics of cork, while the rubber component enhances elasticity, mechanical strength, and resistance to environmental factors. Due to these combined properties, cork-rubber composites are widely used for vibration insulation and noise reduction in industrial and structural applications. One typical example of such a material is AMORIM's VC2100, which demonstrates excellent performance in both sound absorption and vibration damping.

The sandwich structure illustrated in FIG. 9 is configured by placing the damping panel 110a on the base 110 and then placing the additional panel 110b thereon for a cover and fixation. The base 110 and the additional panel 110b, which are steel structures, may be firmly fixed using fastening bolts or clamps. The damping panel 110a is placed in close contact between the base 110 and the additional panel 110b, absorbing vibration energy and at the same time maintaining the structural stability of the entire plate.

Such a sandwich structure provides a much higher vibration isolation effect than a single-layer design, and the transformer transport plate 100 is designed to prevent the vibration and noise of the large transformer 10 from being transmitted to the working environment. The combination of the steel structure and NBR, cork, or a cork-rubber composite material maximizes the advantages of each material, fundamentally solving the problems that occur during the transport of the transformer 10, and contributes to reducing noise pollution in the working environment and improving stability.

According to the transformer transport plate and the transformer transport device including the same according to the embodiments of the present disclosure, it is possible to solve vibration and noise problems that occur during transportation of large electrical devices such as transformers or during noise measurement in a laboratory environment. In addition, it is possible to introduce a structural design capable of simultaneously achieving vibration insulation and noise reduction into a transport device, and to provide a technology that supports stable and efficient transport and testing of large transformers.

Furthermore, it is possible to block vibrations generated in a transformer from being transmitted to the surroundings via a bogie or an air pallet, and reduce noise radiated into the workspace by applying sound-absorbing materials and vibration-insulating materials (NBR, Cork, a cork-rubber composite, etc.). In addition, it is possible to improve the accuracy of noise measurement in a pre-shipment test environment by preventing noise generated from a transport plate from being included in the measured noise value.

Furthermore, it is possible to maintain the stability of equipment during the transportation and installation process of large transformers and to improve efficiency by overcoming the limitations of existing transportation devices. In addition, it is possible to improve the work environment by reducing noise pollution in the workspace and to ensure measurement quality in an experimental environment requiring precision.

Although the above has been described with reference to an embodiment of the present disclosure, those skilled in the art will be able to modify and change the present disclosure in various ways without departing from the spirit and scope of the present disclosure as described in the claims below. Therefore, if the modified implementation basically includes the elements of the claims of the present disclosure, it should be considered that they are all included in the technical scope of the present disclosure.

## Claims

1. A transformer transport plate comprising:
a base configured to support a transformer during transportation and to have a predetermined thickness;
a downward extension part configured to extend downward from a lower end of each side of the base by a predetermined length; and
a first sound-absorbing material attached to at least a portion of the each side of the base, and configured to absorb noise.

2. The plate of claim 1, further comprising:
a second sound-absorbing material provided to surround sides of the base and the downward extension part, and configured to absorb radiated noise.

3. The plate of claim 2, wherein the second sound-absorbing material is made of an acoustic blanket or an acoustic sheet.

4. The plate of any one of the preceding claims, further comprising:
a reinforcement part that has a predetermined shape and is continuously formed along a length direction of the downward extension part.

5. The plate of claim 4, wherein the reinforcement part has a triangular shape and is formed continuously.

6. The plate of claim 4, wherein the reinforcement part has a square shape and is formed at a regular interval.

7. The plate of claim 4, wherein the reinforcement part has a semicircular shape and is formed continuously.

8. The plate of any one of the preceding claims, wherein the base comprises a damping panel made of nitrile butadiene rubber (NBR), cork, or a cork-rubber composite for vibration insulation.

9. A transformer transport device comprising:
a transformer transport plate on which a transformer is mounted and supported; and
a moving part configured to move the transformer transport plate,
wherein the transformer transport plate comprises:
a base configured to support the transformer during transportation and to have a predetermined thickness;
a downward extension part configured to extend downward from a lower end of each side of the base by a predetermined length; and
an acoustic blanket or an acoustic sheet provided to surround sides of the base and the downward extension part, and configured to absorb radiated noise.

10. The device of claim 9, wherein the moving part is an air pallet.

11. The device of claim 9, wherein the moving partis a bogie having a plurality of wheels and a driving part that drives the wheels.

12. The device of any one of claims 9-11, further comprising:
a first sound-absorbing material attached to at least a portion of the each side of the base, and configured to absorb noise.

13. The device of any one of claims 9-12, further comprising:
a reinforcement part that has a predetermined shape and is continuously formed along a length direction of the downward extension part.

14. The device of any one of claims 9-13, wherein the base comprises a damping panel made of nitrile butadiene rubber (NBR), cork, or a cork-rubber composite for vibration insulation.
